# EUROPÄISCHE PATENTSCHRIFT

(11) **EP 0 331 793 B1**
(45) Veröffentlichungstag und Bekanntmachung des Hinweises auf die Patenterteilung: **14.04.1993**
(21) Anmeldenummer: 88116602.9
(22) Anmeldetag: 07.10.1988
(51) Int. Cl.: F16J 15/40, F16C 33/82

(54) **Dichtung für eine magnetisierbare Welle**
Sealing for a magnetizable shaft
Joint pour un arbre magnétisable

(30) Priorität: 10.03.1988 DE 3807893
(43) Veröffentlichungstag der Anmeldung: 13.09.1989
(73) Patentinhaber: Firma Carl Freudenberg, 69469 Weinheim (DE)
(72) Erfinder: Vogt, Rolf, D-6836 Oftersheim (DE); Spies, Karl Heinrich, Dr., D-6943 Birkenau (DE); Kilthau, Gerhard, Dr., D-6800 Mannheim 51 (DE); Freiländer, Peter, Dr., D-6800 Mannheim 31 (DE); Seethaler, Toni, Dr., D-6946 Gorxheimertal (DE)

(56) Entgegenhaltungen:
- DE-A- 3 211 274
- DE-A- 3 501 937
- DE-C- 3 305 649
- US-A- 4 171 818
- US-A- 4 575 103
- SOVIET INVENTIONS ILLUSTRATED Sektion Mechanik, Woche E05, Zusammenfassung Nr. B1626, Q 65, 17. März 1982, Derwent Publications Ltd., London, GB; & SU-A-823720 (KUKIN G M) 25.04.1982
- Trutnovsky, K.: Schutzdichtungen, Düsseldorf 1977

## Beschreibung

Die Erfindung betrifft eine Dichtung nach dem Oberbegriff von Anspruch 1.

Eine solche Dichtung ist aus der SU-A-823 720 bekannt. In einem Maschinengehäuse sind in einer Tandemanordnung zwei Dichtringe mit axialem Abstand benachbart zueinander angeordnet, wobei der axiale Abstand durch einen Ringmagnet überbrückt ist. Die Dichtringe umfassen gummielastische Manschetten aus einem magnetisierbaren Werkstoff. Die Dichtringe werden durch Scheiben innerhalb des Gehäuses positioniert, die ebenfalls aus einem magnetisierbaren Werkstoff bestehen. Die abzudichtende Welle und/oder der Dichtring im Bereich seiner Dichtfläche weisen zur Rückförderung des abzudichtenden Fluids entsprechende Oberflächenstrukturen auf. Das Ferrofluid wird bei der vorbekannten Dichtungsanordnung zwischen der Dichtfläche eines der Dichtringe und der Welle gehalten. Dabei ist allerdings zu beachten, daß die vorbekannte Dichtung durch die Tandemanordnung der beiden Dichtringe eine große axiale Ausdehnung aufweist und daß die Dichtung eine Vielzahl von Bauteilen umfaßt, was in wirtschaftlicher Hinsicht wenig befriedigend ist.

Aus der US-A-4,171,818 ist eine Ferrofluiddichtung bekannt, die als Wellendichtung vorgesehen ist. An der Dichtfläche der Dichtlippe wird durch eine entsprechende Anordnung eines Ringmagneten ein Ferrofluid gehalten. Die Dichtfläche der Dichtlippe liegt nicht unmittelbar an der Welle an, sondern zwischen der Dichtfläche und der Welle besteht ein Spalt, in dem das Ferrofluid angeordnet ist. Die hier gezeigte Ferrofluiddichtung gelangt als Hauptdichtung zur Anwendung, wobei in den Fällen eine Abdichtung erzielt werden kann, bei denen die eine Seite mit atmosphärischem Druck und die andere Seite mit Unterdruck beaufschlagt ist. Die Druckhaltefähigkeit dieser Dichtungsvorrichtung ist wenig befriedigend.

Eine Dichtungsanordnung, bei der als Vorschaltdichtung eine Rundbürste zur Anwendung gelangt, ist aus der DE-A-33 05 649 bekannt. Die dem abgedichteten Raum zugewandte und die Dichtfläche axial begrenzende Kegelfläche schließt dabei mit der Wellenachse einen steileren Winkel ein als die gegenüberliegende, von dem abgedichteten Raum abgewandte Kegelfläche. Hierdurch wird bei umlaufender Welle eine permanente, in den abgedichteten Raum weisende Förderwirkung erzielt. Diese wirkt sich zwar positiv aus im Hinblick auf die Abdichtung des in demselben enthaltenen Mediums, bedingt aber eine ständige Sogwirkung in dem der Dichtung außenseitig vorgelagerten Bereich. Hierdurch können zusammen mit der Luft Fremdkörper in den Dichtspalt gelangen und als Folge erhöhten Verschleißes einen vorzeitigen Ausfall der Dichtung bedingen. Auch ist die Vorschaltdichtung in erheblichem Maße abrasiv belastet. Ihre Gebrauchsdauer und damit diejenige der Dichtung ist dementsprechend wenig befriedigend.

Ferrofluiddichtungen, die als Hauptdichtungen zur Anwendung gelangen, sind an sich bekannt und werden beispielsweise in der DE-A-35 01 937 beschrieben. Sie bedienen sich eines die abzudichtende Welle in einem radialen Abstand umschließenden Permanentmagneten, wobei in dem durch den Abstand gebildeten Spalt ein Ferrofluid angeordnet ist. Die Dichtungen gelangen als Hauptdichtungen zur Anwendung, und ihre Druckhaltefähigkeit gestattet eine Verwendung in Fällen, in denen die eine Seite dem atmosphärischen Druck und die andere Seite einem Unterdruck ausgesetzt ist.

Der Erfindung liegt die Aufgabe zugrunde, eine Dichtung der eingangs genannten Art derart weiterzuverbessern, daß sich unter Vermeidung einer Beeinträchtigung der Dichtwirkung ein besserer Schutz der Dichtlippe vor einer Beaufschlagung durch Fremdpartikel ergibt.

Diese Aufgabe wird erfindungsgemäß bei einer Dichtung der eingangs genannten Art mit den kennzeichnenden Merkmalen von Anspruch 1 gelöst. Auf vorteilhafte Ausgestaltungen nehmen die Unteransprüche Bezug.

Die Erfindung geht aus von der Erkenntnis, daß übliche Wellendichtungen mit einer Dichtlippe aus polymerem Werkstoff eine in Richtung des abzudichtenden Raumes gerichtete Förderwirkung haben, die die Druckhaltefähigkeit üblicher Ferrofluiddichtungen um das 1,5- bis 3fache übersteigt. Ferrofluiddichtungen dieser Art gelangen im Rahmen der vorliegenden Erfindung ebenfalls, jedoch hier als Vorschaltdichtung für die Dichtlippe, zur Anwendung, wobei zwischen der Ferrofluiddichtung und dem an der Oberfläche der abzudichtenden Welle anliegenden Teil der Dichtlippe ein ringförmiger Pufferraum vorhanden ist. In diesem baut sich bei umlaufender Welle als Folge der sich im Bereich der Dichtlippe ergebenden Förderwirkung ein Vakuum auf, das zu irgendeinem Zeitpunkt die Druckhaltefähigkeit der als Vorschaltdichtung verwendeten Ferrofluiddichtung übersteigt und ein kurzzeitiges Abheben des flüssigen Ferrofluids von der Oberfläche der abzudichtenden Welle zur Folge hat.

Luft atmosphärischen Druckes vermag dadurch in den Pufferraum einzuströmen und das Vakuum auf diese Weise aufzuheben bevor sich das flüssige Ferrofluid erneut an den gesamten Außenumfang der abzudichtenden Welle anlegt. Der Pufferraum ist darin wieder in axialer Richtung nach außen geschlossen, bis das sich bildende Vakuum die Druckhaltefähigkeit der Vorschaltdichtung aufs neue überschreitet und das "Aufklappen" des in dem Ringspalt zwischen dem Permanentmagneten und der Oberfläche der abzudichtenden Welle angeordneten Ferrofluids bedingt.

Die Zeitdauer in der sich das "Aufklappen" vollzieht, ist auf wenige Millisekunden beschränkt, wodurch in der Außenluft enthaltene Staubpartikel der Bewegung der angesogenen Luft infolge ihrer Trägheit nicht zu folgen vermögen. Selbst nach langer Betriebszeit und unter kritischen Bedingungen sind daher in dem Pufferraum so gut wie keine der Außenluft entstammende Fremdpartikel feststellbar.

Von weiterer Bedeutung dürfte es in dieser Hinsicht sein, daß die geometrische Ausdehnung des in das "Aufklappen" einbezogenen Teiles des ferrofluidischen Flüssigkeitsringes zumeist auf ein kleines Segment beschränkt und der Oberfläche der in einer Rotationsbewegung befindlichen Welle unmittelbar benachbart ist. Dieser Bereich dürfte aus strömungstechnischen Gründen relativ staubfrei sein und das Segment diejenige Umfangsstelle der Welle bezeichnen, an welcher deren Abstand von der Innenseite des Permanentmagneten den vergleichsweise größten Wert erreicht.

Der Ringmagnet kann an dem die Dicht lippe tragenden Gehäuse festgelegt sein, beispielsweise durch nachträgliches, gegenseitiges Verklammern. Das Gehäuse und die Dichtlippe können in einem solchen Falle hinsichtlich ihrer Gestaltung derjenigen irgendeiner bekannten Wellendichtung entsprechen.

Nach einer anderen Ausgestaltung ist es vorgesehen, daß der Ringmagnet an der Dichtlippe festgelegt und mit dieser gemeinsam relativ zu dem Gehäuse beweglich ist. Hierdurch wird eine gute radiale Führung der Dichtlippe in bezug auf die Oberfläche der abzudichtenden Welle errreicht, was eine Reduzierung von deren Verschleiß bei betriebsbedingten Relativverlagerungen in radialer Richtung erlaubt.

Der Spalt zwischen dem Ringmagneten und der Oberfläche der abzudichtenden Welle, in welchem das Ferrofluid enthalten ist, sollte eine axiale Länge haben, die größer ist als die radiale Weite. Auch bei einem Verlust einer gewissen Teilmenge des Ferrofluids ergibt sich in diesem Falle keine grundsätzliche Beeinträchtigung der insgesamt verfügbaren Betriebssicherheit. Zweckmäßig sollte die axiale Länge unter den genannten Gesichtspunkten etwa drei- bis sechsmal so groß sein wie die radiale Weite des Spaltes.

In Abhängigkeit von den im speziellen Anwendungsfall gegebenen räumlichen Verhältnissen kann es zweckmäßig sein, wenn der Ringmagnet auf der der Welle zugewandten Seite mit einem Polschuh versehen ist. Das das Ferrofluid haltende, magnetische Feld kann hierdurch der Oberfläche der Welle in einer besonders günstigen Weise zugeordnet und angenähert werden.

Der Ringmagnet und/oder der Polschuh kann auch aus einem magnetisierbaren Kunststoff bestehen. Neben einer Verbesserung der Korrosionsbeständigkeit resultiert in diesem Falle eine Verminderung des Gewichtes, was für bestimmte Anwendungen von Vorteil ist.

Die erfindungsgemäße Dichtung ist verhältnismäßig einfach herstellbar, wobei auf bekannte Einzelkomponenten zurückgegriffen werden kann. Die Gebrauchsdauer ist im Vergleich zu den bekannten Ausführungen deutlich verbessert, wobei es von weiterer, hervorzuhebender Bedeutung ist, daß eine Kontamination der außenseitig an die Dichtung angrenzenden Luftbereiche ausgeschlossen ist. Beispielsweise in bezug auf eine Verwendung der erfindungsgemäßen Dichtung im medizinischen oder elektromechanischen Bereich ist das von erheblicher Bedeutung.

Der Gegenstand der vorliegenden Erfindung wird nachfolgend anhand der in der Anlage beigefügten Zeichnung weiter erläutert:

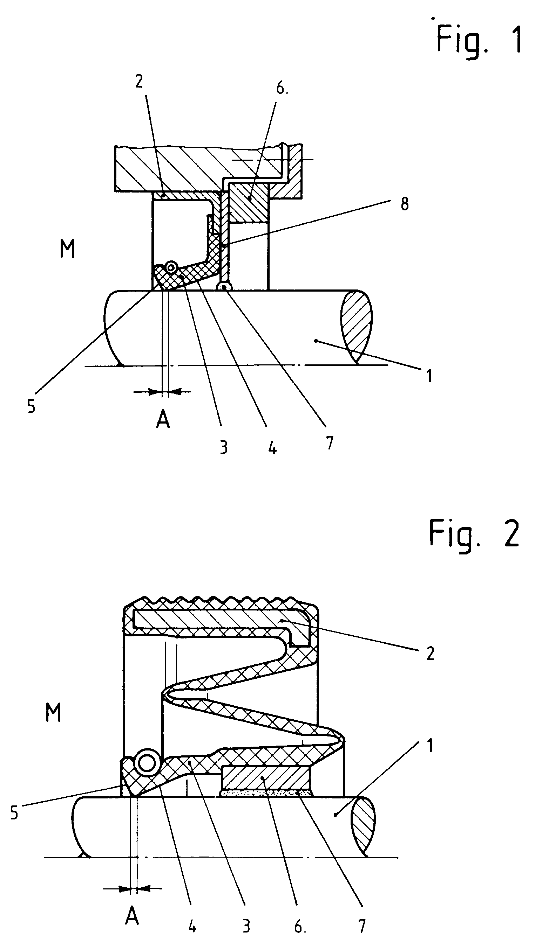

Die Figuren 1 bis 3 nehmen dabei Bezug auf unterschiedliche Ausführungsformen, welche jeweils in halbgeschnittener Darstellung wiedergegeben sind.

Die Ausführung nach Figur 1 umfaßt ein Gehäuse 2 aus Stahlblech, das ein winkelförmiges Profil aufweist und an dem in radialer Richtung nach innen weisen den Schenkel eine Dichtlippe 3 aus Gummi. Diese ist unmittelbar angeformt und durch Vulkanisation angebunden und in sich verfestigt.

Die Dichtlippe 3 ist herstellungsbedingt mit einer Dichtkante versehen, welche durch zwei einander durchschneidende Kegelflächen 4,5 gebildet wird. Sie wird in dem gezeigten, betriebsbereiten Zustand durch eine auf die Außenseite aufgebrachte Ringwendelfeder mit einer elastischen Vorspannung an die Oberfläche der abzudichtenden Welle 1 angepreßt, wobei die Dichtkante eine elastische Deformierung erfährt und die Oberfläche der abzudichtenden Welle 1 im Bereich der Zone "A" flächenhaft berührt Die Zone "A" ist in Richtung des abgedichteten Raumes "M" durch die Kegelfläche 5 begrenzt, welche mit der Achse der abzudichtenden Welle 1 einen steileren Kegelwinkel einschließt als die axial in entgegengesetzter Richtung weisende Kegelfläche 4. Bei umlaufender Welle 1 wird hierdurch unter normalen Betriebsbedingungen eine in Richtung des abgedichteten Raumes "M" weisende Förderwirkung erzielt.

Auf der von dem abzudichtenden Raum M abgewandten Seite des Gehäuses 2 ist ein mit einem kreisringförmig nach innen vorspringenden Polschuh 8 versehener Ringmagnet 6 angeordnet. Der Polschuh 8 ist der Oberfläche der abzudichtenden Welle 1 dicht angenähert, wodurch zwischen beiden der Spalt 7 gebildet wird. Das Ferrofluid ist hierin enthalten. Es wird durch die sich zwischen dem Polschuh 8 und der Welle 1 ergebenden Feldlinien des Permanentmagneten 6 an einem Entweichen gehindert.

Die Funktion der vorstehend beschriebenen Dichtung läßt sich wie folgt beschreiben:
Bei umlaufender Welle ergibt sich im Bereich der Dichtkante der Dichtlippe 3 eine stetige, in Richtung des abgedichteten Raumes "M" weisende Förderwirkung. Diese hat den Aufbau eines zunehmenden Vakuums im Pufferraum zwischen der Dichtlippe 3 und der Ferrofluiddichtung zur Folge, welche schließlich so stark ist, daß der aus Ferrofluid gebildete Flüssigkeitsring zwischen der Innenseite des Polschuhs 8 und der Außenseite der abzudichtenden Welle 1 kurzzeitig an irgendeiner Umfangsstelle von der Oberfläche der abzudichtenden Welle 1 abhebt und Luft atmosphärischen Druckes in den Pufferraum nachströmen läßt. Der zuvor im Pufferraum vorhandene Unterdruck wird hierdurch beseitigt und unmittelbar anschließend der erneute, durchgehende Flüssigkeitskontakt zwischen dem aus Ferrofluid bestehenden Flüssigkeitsring und der Oberfläche der abzudichtenden Welle 1 hergestellt. Der Arbeitszyklus kann damit von neuem beginnen.

Die in Figur 2 gezeigte Ausführung der erfindungsgemäßen Dichtung unterscheidet sich von der vorstehend beschriebenen dadurch, daß der Ringmagnet 6 einstückig mit dem Lippenring 3 verbunden und der Oberfläche der abzudichtenden Welle 1 in gleicher Weise zugeordnet ist wie die Dichtlippe des Lippenringes 3. Zwischen dem Lippenring 3 und dem in radialer Richtung nach innen weisenden Schenkel des Profils des Gehäuses 2 ist ein membranartig ausgebildetes Übergangsstück vorhanden, das ein Z-förmiges Profil aufweist mit Filmscharnieren im Bereich der Ecken, welche die steifen Bereiche des Profils verbinden. Neben einer guten axialen Führung der Dichtlippe ist hierdurch eine gute Relativbeweglichkeit derselben in radialer Richtung gewährleistet.

Der Lippenring 3 weist eine Dichtkante auf, die ähnlich gestaltet und während ihrer bestimmungsgemäßen Verwendung deformiert ist wie diejenige der vorstehend beschriebenen Ausführung nach Figur 1. Der Lippenring 3 weist jedoch in dem der Außenluft zugewandten Bereich in einem axialen Abstand von der Dichtkante den Ringmagneten 6 auf, der innenseitig einen Abstand von der Oberfläche der abzudichtenden Welle 1 hat. In dem hierdurch gebildeten Spalt 7 ist das Ferrofluid angeordnet, welches als Vorschaltdichtung unter normalen Betriebsbedingungen in gleicher Weise wirkt wie vorstehend im Zusammenhang mit der Erläuterung von Figur 1 beschrieben. Zusätzlich gewährleistet das Vorhandensein des aus einer Flüssigkeit bestehenden Ferrofluids in dem Spalt 7, daß dieser auf dem gesamten Umfang der Welle 1 von gleichbleibender, radialer Weite ist. Der Lippenring 3 ist dadurch der Oberfläche der abzudichtenden Welle 1 stets in gleichbleibender Weise zugeordnet, was insbesondere beim betriebsbedingten Auftreten von radialen Wellenverlagerungen für die Erzielung eines guten Abdichtungsergebnisses von Vorteil ist. Eine störende Veränderung der Zuordnung der Dichtkante zu der Welle ist auch in einem solchen Fall nicht zu befürchten.

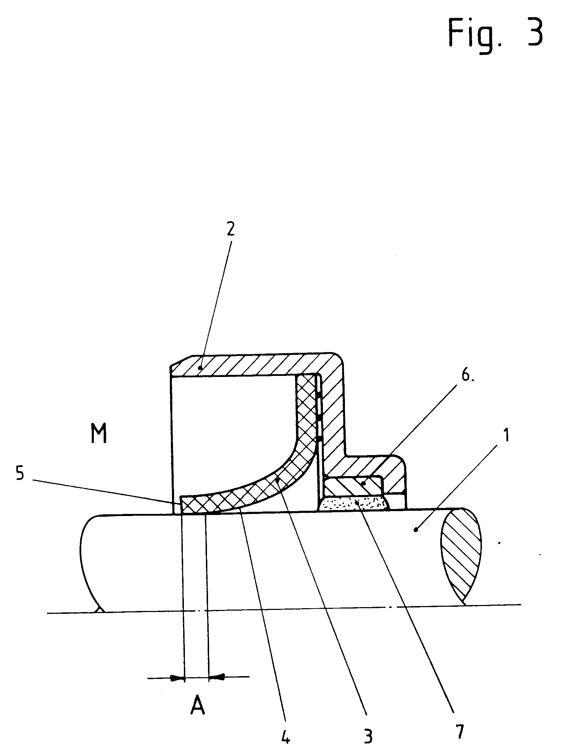

Die in Figur 3 gezeigte Ausführung unterscheidet sich von den vorstehend beschriebenen dadurch, daß der Ringmagnet 6 unmittelbar in einer Ausnehmung des Gehäuses 2 der Dichtung festgelegt ist. Sein Innendurchmesser ist der Oberfläche der abzudichtenden Welle 1 bis auf einen engen radialen Abstand angenähert. In dem so gebildeten Spalt 7 ist das Ferrofluid enthalten.

Auf der dem abgedichteten Raum "M" zugewandten Seite ist an den in radialer Richtung nach innen weisenden Schenkel des Profils des Gehäuses 2 eine aus PTFE bestehende Dichtscheibe anvulkanisiert. Diese ist im Bereich ihres Innendurchmessers in Richtung des abgedichteten Raumes "M" vorgewölbt und liegt im Bereich einer geringen, axialen Erstreckung mit der Dichtfläche A an der Oberfläche der abzudichtenden Welle 1 gleitend an. Auch in diesem Falle ist die sich an die Dichtfläche A in der druckabgewandten Richtung anschließende Endfläche 4 der Achse der abzudichtenden Welle 1 unter einem flacheren Winkel zugeordnet als die axial gegenüberliegende Endfläche 5. Die unter normalen Betriebsbedingungen in Richtung des abgedichteten Raumes M weisende Förderwirkung ist dadurch derjenigen der vorstehend beschriebenen Ausführungen ähnlich. Des gleiche trifft auf die Funktion der Vorschaltdichtung zu.

## Patentansprüche

1. Dichtung für eine magnetisierbare Welle (1), umfassend ein Gehäuse (2) mit einer radial verschiebbaren Dichtlippe (3) aus polymerem Werkstoff, deren an der Welle (1) anliegende Dichtfläche (A) in der von dem abgedichteten Raum (M) abgewandten Richtung durch eine kegelig geneigte Endfläche begrenzt wird, die mit der Wellenachse einen kleineren Winkel einschließt als die axial entgegengesetzte Endfläche sowie eine Vorschaltdichtung auf der von dem abgedichteten Raum (M) abgewandten Seite, wobei die Vorschaltdichtung aus einem Ringmagneten (6) besteht oder aus einem Ringmagneten (6), der auf der der Welle (1) zugewandten Seite mit einem Polschuh (8) versehen ist, wobei der Ringmagnet (6) oder der Polschuh (8) die Welle (1) in einem Abstand umschließt und wobei in dem durch den Abstand gebildeten Spalt (7) ein Ferrofluid angeordnet ist, dadurch gekennzeichnet, daß zwischen der Vorschaltdichtung und dem an der Oberfläche der abzudichtenden Welle (1) anliegenden Teil der Dichtlippe (3) ein ringförmiger Pufferraum angeordnet ist.

2. Dichtung nach Anspruch 1, dadurch gekennzeichnet, daß der Ringmagnet (6) an dem Gehäuse (2) festgelegt ist.

3. Dichtung nach Anspruch 1, dadurch gekennzeichnet, daß der Ringmagnet (6) an der Dichtlippe (3) festgelegt ist.

4. Dichtung nach Anspruch 1 bis 3, dadurch gekennzeichnet, daß der Spalt (7) eine axiale Länge hat, die größer ist als die radiale Weite.

5. Dichtung nach Anspruch 4, dadurch gekennzeichnet, daß die axiale Länge drei- bis sechsmal so groß ist wie die radiale Weite.

6. Dichtung nach Anspruch 1 bis 5, dadurch gekennzeichnet, daß der Ringmagnet (6) und/oder der Polschuh (8) aus einem magnetisierbaren Kunststoff besteht.

## Claims

1. A seal for a magnetisable shaft (1), comprising a housing (2) with a radially displaceable sealing lip (3) of polymer material, whose sealing surface (A) resting against the shaft (1) is bounded in the direction facing away from the sealed-off space (M) by a conically inclined end face which encloses a smaller angle with the shaft axis than the axially opposite end face, and comprising a preceding seal on the side facing away from the sealed-off space (M), the preceding seal being composed of an annular magnet (6) or of an annular magnet (6) which is provided with a pole shoe (8) on the side facing the shaft (1), the annular magnet (6) or the pole shoe (8) surrounding the shaft (1) with spacing, and a ferrofluid being arranged in the gap (7) formed by the spacing, characterised in that an annular buffer space is arranged between the preceding seal and the part of the sealing lip (3) resting against the surface of the shaft (1) to be sealed off.

2. A seal according to claim 1, characterised in that the annular magnet (6) is fixed to the housing (2).

3. A seal according to claim 1, characterised in that the annular magnet (6) is fixed to the sealing lip (3).

4. A seal according to any of claims 1 to 3, characterised in that the gap (7) has an axial length which is greater than the radial width.

5. A seal according to claim 4, characterised in that the axial length is three to six times as large as the radial width.

6. A seal according to any of claims 1 to 5, characterised in that the annular magnet (6) and/or the pole shoe (8) is composed of a magnetisable plastic.

## Revendications

1. Joint pour un arbre magnétisable (1), comportant un carter (2) pourvu d'une lèvre d'étanchéité (3) en matériau polymère, déplaçable radialement et dont la surface d'étanchéité (A), s'appliquant contre l'arbre (1), est délimitée, dans la direction opposée au volume étanché (M), par une surface terminale inclinée avec un profil conique, qui fait avec l'axe de l'arbre un angle plus petit que la surface terminale axialement opposée, ainsi qu'un joint d'arrêt préalable situé sur le côté opposé au volume étanché (M), ce joint d'arrêt préalable étant constitué d'un aimant annulaire (6) ou bien comportant un aimant annulaire (6), qui est pourvu d'une pièce polaire (8) sur le côté dirigé vers l'arbre (1), l'aimant annulaire (6) ou la pièce polaire (8) entourant l'arbre (1) à un certain espacement et un fluide magnétique étant disposé dans l'intervalle (7) créé par cet espacement, caractérisé en ce qu'un volume-tampon de forme annulaire est prévu entre le joint d'arrêt préalable et la partie de la lèvre d'étanchéité (3) qui s'applique contre la surface de l'arbre (1) à étancher.

2. Joint selon la revendication 1, caractérisé en ce que l'aimant annulaire (6) est fixé sur le carter (2).

3. Joint selon la revendication 1, caractérisé en ce que l'aimant annulaire (6) est fixé sur la lèvre d'étanchéité (3).

4. Joint selon une des revendications 1 à 3, caractérisé en ce que l'intervalle (7) a une longueur axiale qui est plus grande que la largeur radiale.

5. Joint selon la revendication 4, caractérisé en ce que la longueur axiale est trois à six fois plus grande que la largeur radiale.

6. Joint selon une des revendications 1 à 5, caractérisé en ce que l'aimant annulaire (6) et/ou la pièce polaire (8) sont constitués d'une matière plastique magnétisable.
